(19) 

**Europäisches Patentamt**
**European Patent Office**
**Office européen des brevets**

(11) **EP 2 154 517 A1**

(12) # EUROPEAN PATENT APPLICATION
published in accordance with Art. 153(4) EPC

(43) Date of publication:
**17.02.2010 Bulletin 2010/07**

(51) Int Cl.:
***G01N 25/18*** (2006.01)

(21) Application number: **08764270.8**

(22) Date of filing: **08.05.2008**

(86) International application number:
**PCT/JP2008/058563**

(87) International publication number:
**WO 2008/143013 (27.11.2008 Gazette 2008/48)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **14.05.2007 JP 2007128431**

(71) Applicant: **Mitsui Mining & Smelting Co., Ltd
Shinagawa-ku
Tokyo 141-8584 (JP)**

(72) Inventor: **NAKAMURA, Toshimi
Ageo-shi
Saitama 362-0021 (JP)**

(74) Representative: **Gervasi, Gemma et al
Notarbartolo & Gervasi S.p.A.
Corso di Porta Vittoria 9
20122 Milano (IT)**

(54) **DETECTION UNIT MOLD PACKAGE, AND FLUID DISCRIMINATION SENSOR MODULE USING THE MOLD PACKAGE**

(57)     Provided is a detection unit mold package (2A), which is equipped with plate-shaped protrusions (21P and 22P) to contact an object liquid so as to exchange the heat with the object liquid. The plate-shaped protrusions (21P and 22P) are formed by sealing a liquid-kind detecting unit (21a) and a liquid-temperature detecting unit (22a), which are made of thin-film chips containing at least temperature-sensitive elements, and metallic die pads (21c and 22c) having those detecting units joined thereto, with a sealing material (23), so that they may not be exposed to the surface. The plate-shaped protrusions (21P and 22P) have their two principal planes in parallel with the metallic die pads (21c and 22c).

**FIG. 3**

EP 2 154 517 A1

**Description**

{Technical Field}

The present invention relates to a fluid discrimination device which discriminates the type or kind of fluid by utilizing fluid thermal properties, such as a liquid type identification device which determines whether or not a liquid is a predetermined one by utilizing liquid thermal properties and, more particularly, to a detection unit mold package used in the fluid discrimination device and a fluid discrimination sensor module, such as a liquid type identification sensor module, using the detection unit mold package.

A liquid type identification device including a detection unit mold package and a liquid type identification sensor module using the mold package according to the present invention can be used for determining whether or not a liquid that is sprayed as urea aqueous solution having a predetermined urea concentration to an exhaust gas purification catalyst for decomposition of nitrogen oxide (NOx) in a system for purifying exhaust gas emitted from an internal-combustion engine of, e.g., a motorcar, automobile or motor-vehicle is actually the urea aqueous solution having a predetermined urea concentration.

{Background Art}

In an internal-combustion engine of a motorcar, fossil fuels such as gasoline or light-oil are burned. Exhaust gas generated by the burning contains water and carbon dioxide, as well as environmental pollutants such as unburned carbon monoxide (CO), unburned carbon hydride (HC), sulfur oxide (SOx), and nitrogen oxide (NOx). In recent years, various countermeasures to purify the motorcar exhaust gas have been taken especially for environmental protection and prevention of living environment pollution.

As one of such countermeasures, a use of an exhaust gas purification catalyst unit can be exemplified. Specifically, a three-way catalyst for exhaust gas purification is disposed in the middle of an exhaust system, and, there, CO, HC, NOx, etc. are decomposed by oxidation-reduction reaction to thereby render the above environmental pollutants harmless. In order to maintain the decomposition of NOx in the catalyst unit, urea aqueous solution is sprayed to the catalyst from upstream side of the catalyst unit in the exhaust system. In order to enhance the rate of decomposition of NOx, urea concentration of the urea aqueous solution should fall within a specified range, and a urea concentration of 32.5% is considered to be optimum.

The urea aqueous solution is stored in a urea aqueous solution tank installed in a motorcar. In this state, however, concentration may change with time, or unevenness in the concentration distribution may locally occur in the tank. The urea aqueous solution which is supplied from the tank to a spray nozzle through a supply pipe by means of a pump is taken from the outlet provided near the bottom portion of the tank in general. Therefore, it is important for the urea aqueous solution in this area to have a predetermined urea concentration, in order to enhance the efficiency of the catalyst unit.

Further, it could be that a liquid other than the urea aqueous solution is accidentally introduced into the urea aqueous solution tank under present circumstances. In such a case, it is necessary to quickly detect that the liquid is a solution other than the urea aqueous solution having a predetermined urea concentration so as to issue an alarm, in order for the catalyst unit to fulfill its capability.

For this purpose, JP-A-2005-337969 (PTL 1) discloses, as a liquid type identification device for determining whether or not a liquid to be measured is a predetermined one, one including: an indirectly heated type liquid type detection unit having a heating element and a temperature sensing element; and a liquid temperature detection unit. In this liquid type identification device, a single pulse voltage is applied to the heating element of the indirectly heated type liquid type detection unit to cause the heating element to generate heat, and an identification calculation unit makes an identification of a liquid to be measured according to the output of a liquid type detection circuit including the temperature sensing element of the indirectly heated type liquid type detection unit and the liquid temperature detection unit. The liquid temperature detection unit disclosed in this literature has the same configuration as that of the liquid type detection unit.

In the liquid type identification device disclosed in PTL 1, the indirectly heated type liquid type detection unit and liquid temperature detection unit are integrated by a mold resin to constitute a detection unit mold package. A thin-film chip serving as a liquid type detection unit including a heating element and a temperature sensing element is connected to a metal fin serving as a heat transfer member, and one end portion of the metal fin is protruded from the mold resin for heat exchange between the metal fin and liquid to be measured. A thin-film chip serving as a liquid temperature detection unit including a temperature sensing element is connected to a metal fin serving as a heat transfer member, and one end portion of the metal fin is protruded from the mold resin for heat exchange between the metal fin and liquid to be measured.

In the detection unit mold package of the liquid type identification device, air and the like dissolved in the liquid to be measured is evaporated by a rise in temperature to form gas bubbles, and the gas bubbles may adhere to the outer surface of a metal fin in some cases. Further, in the case where the liquid stored in the tank has free surface in the tank, when the liquid in the tank is shaken, the liquid surface is agitated to cause gas such as air contacting the liquid surface to be caught up in the liquid, with the result that the gas remains in the liquid as gas bubbles, and the gas bubbles may adhere to the outer surface of the metal fin in some cases. In particular, in the case of urea aqueous solution in the tank installed in a motorcar, severe vibration based on an external force is repeatedly applied while the motorcar is moving, so that the adherence of the gas bubbles to the outer surface of the metal fin becomes marked.

The adherence of the gas bubbles to the metal fin prevents heat emitted from a heating element of an indirectly heated type liquid type detection unit of the detection unit mold package from being favorably transferred through the metal fin to the liquid, or prevents heat from being favorably transferred from the liquid through the metal fin to the temperature sensing element. When the heat transfer between the metal fin and liquid to be measured is not performed normally, a large error occurs in the measurement value of the concentration of the liquid to be measured, causing the measurement accuracy to be varied, which may result in remarkable decrease in the reliability of measurement.

In order to solve the above problem, JP-A-2006-29956 (PTL 2) has proposed that a hydrophilic membrane such as a silicon oxide membrane is applied to the outer surface of the metal fin contacting the liquid to be measured. Further, PTL 2 discloses another example of the detection unit mold package. That is, a heat transfer member for a concentration detection unit and a liquid temperature detection unit is not formed to be protruded from a mold resin, but only one side thereof is allowed to be exposed from the mold resin.

{Citation List}

{Patent Literature}

    {PTL 1} JP-A-2005-337969
    {PTL 2} JP-A-2006-29956

{Summary of Invention}

{Technical Problem}

Since a difference exists in thermal expansion coefficient between the heat transfer member and mold resin, there is a possibility that when the detection unit mold package disclosed in PTL 1 is repeatedly used, liquid to be measured may enter between the heat transfer member and mold resin and reach the thin-film chip.

Further, in the detection unit mold package disclosed in PTL 2 as another example, although a hydrophilic membrane such as a silicon oxide membrane is applied to the surface of the detection unit mold package contacting the liquid to be measured, the thickness thereof is as very small as 0.01 $\mu$m to 1 $\mu$m. Therefore, as in the case of the detection unit mold package of PTL 1, there is a possibility that when the detection unit mold package is repeatedly used, liquid to be measured may enter between the heat transfer member and mold resin and reach the thin-film chip.

When the entering of the liquid to be measured occurs in the detection unit mold package, detection error may become large to degrade detection accuracy.

Further, to apply a hydrophilic membrane such as a silicon oxide membrane to the surface of the detection unit mold package for the purpose of preventing adherence of gas bubbles complicates the manufacturing process of the detection unit mold package for liquid type identification device.

In view of the above situation, a first object of the present invention is to provide a detection unit mold package for a fluid discrimination device such as a liquid type identification device capable of preventing entering of fluid to be measured such as a liquid to be measured even in the long term use to prevent degradation of detection accuracy without complicating the manufacturing process thereof.

A second object of the present invention is to provide a detection unit mold package for a fluid discrimination device such as a liquid type identification device capable of reducing adherence of gas bubbles to the surface of the detection unit mold package to achieve increase and stabilization of measurement accuracy without complicating the manufacturing process thereof.

A third object of the present invention is to provide a fluid discrimination sensor module such as a liquid type identification sensor module using the detection unit mold package for a fluid discrimination device such as a liquid type identification device.

{Solution to Problem}

To achieve one of the above objects, according to the present invention, there is provided a detection unit mold package used for a fluid discrimination device which discriminates the type of a fluid to be measured, including a protrusion immersed in the fluid to be measured,
wherein the protrusion is constructed by sealing a detection unit and a die pad jointed to the detection unit.
In an aspect of the present invention, the discrimination device discriminates whether or not the fluid to be measured is a predetermined one, the protrusion is a plate-shaped protrusion, the detection unit is a thin-film chip including at least a temperature sensing element, and both main surfaces of the plate-shaped protrusion extend in parallel to the die pad.
Further, to achieve one of the above objects, according to the present invention, there is provided the above detection unit mold package that is used for a liquid type identification device which identifies whether or not the liquid to be measured is a predetermined one and includes a plate-shaped protrusion contacting the liquid to be measured for heat exchange with the liquid to be measured,
wherein the plate-shaped protrusion is constructed by sealing, with a sealing material, the detection unit which is a thin-film chip including at least a temperature sensing element and a metal die pad jointed to the detection unit in such a manner that the detection unit and metal die pad are not exposed to the surface, and both main surfaces of the plate-shaped protrusion extend in parallel to the metal die pad.
In an aspect of the present invention, the detection unit mold package includes an external electrode terminal electrically connected to an electrode of the detection unit and protruded from the sealing material in the direction opposite to the plate-shaped protrusion. In an aspect of the present invention, ratio between the thickness of the sealing material that covers a first main surface of the metal die pad jointed to the detection unit and thickness of the sealing material that covers a second main surface of the metal die pad on the opposite side to the first main surface is set in a range of 0.5 to 2.0.
Further, to achieve one of the above objects, according to the present invention, there is provided the above detection unit mold package that is used for a liquid type identification device which identifies whether or not the liquid to be measured is a predetermined one and includes first and second plate-shaped protrusions contacting the liquid to be measured for heat exchange with the liquid to be measured,
wherein the first plate-shaped protrusion is constructed by sealing, with a sealing material, a liquid type detection unit which is a thin film chip including at least a heating element and a temperature sensing element and a first metal die pad jointed to the liquid type detection unit in such a manner that the liquid type detection unit and first metal die pad are not exposed to the surface, both surfaces of the first plate-shaped protrusion extending in parallel to the first metal die pad,
the second plate-shaped protrusion is constructed by sealing, with a sealing material, a liquid temperature detection unit which is a thin film chip including at least a temperature sensing element and a second metal die pad jointed to the liquid temperature detection unit in such a manner that the liquid temperature detection unit and second metal die pad are not exposed to the surface, both surfaces of the second plate-shaped protrusion extending in parallel to the second metal die pad, and
the first and second plate-shaped protrusions are arranged apart from each other on the same plane.
In an aspect of the present invention, the detection unit mold package includes external electrode terminals electrically connected respectively to an electrode of the liquid type detection unit and electrode of the liquid temperature detection unit and protruded from the sealing material in the direction opposite to the plate-shaped protrusions. In an aspect of the present invention, ratio between the thickness of the sealing material that covers a first main surface of the first or second metal die pad jointed to the liquid type detection unit or liquid temperature detection unit and the thickness of the sealing material that covers a second main surface of the first or second metal die pad on the opposite side to the first main surface is set in a range of 0.5 to 2.0.
Further, to achieve one of the above objects, according to the present invention, there is provided a fluid discrimination sensor module including the above detection unit mold package.
Further, to achieve one of the above objects, according to the present invention, there is provided a liquid type identification sensor module including: the above detection unit mold package for liquid type identification device; a first member that supports the detection unit mold package for liquid type identification device such that the plate-shaped protrusion is (or the first and second plate-shaped protrusions are) protruded from the first member; a second member that is fitted to the first member on the side opposite to the side at which the plate-shaped protrusion is (or the first and second plate-shaped protrusions are) protruded from the first member and forms a housing space between itself and the first member; a liquid type detection circuit board that is housed in the housing space and is electrically connected to the detection unit (or the liquid type detection unit and liquid temperature detection unit) of the detection unit mold package for liquid type identification device; and a terminal pin that is electrically connected to the liquid type detection circuit board and penetrates the second member to extend outside.

Further, to achieve one of the above objects, according to the present invention, there is provided a fluid discrimination device including the above detection unit mold package or the above sensor module.

Further, to achieve one of the above objects, according to the present invention, there is provided a fluid discrimination method that discriminates the type of the fluid to be measured by using the above fluid discrimination device.

In an aspect of the present invention, the fluid to be measured is heated, and the type of the fluid to be measured is discriminated based on a plurality of detection signals from the detection unit at a plurality of different time points measured from the start of heating the fluid.

{Advantageous Effects of Invention}

According to the detection unit mold package of the present invention and fluid discrimination sensor module using the detection unit mold package, the protrusion is constructed by sealing the detection unit and the die pad jointed to the detection unit, so that entering of fluid to be measured between the die pad and sealing material or sealing member is prevented even in the long term use to prevent degradation of detection accuracy.

According to the detection unit mold package for liquid type identification device of the present invention and liquid type identification sensor module using the detection unit mold package, the plate-shaped protrusion (or the first and second plate-shaped protrusions) contacting the liquid to be measured is constructed by sealing, with a sealing material, the metal die pad (or the first and second metal die pads) jointed to the detection unit (or the liquid type detection unit and liquid temperature detection unit) in such a manner that the metal die pad is (or the first and second metal die pads are) not exposed to the surface, so that entering of the liquid to be measured between the metal die pad (or the first and second metal die pads) and sealing material or sealing member is prevented even in the long term use to prevent degradation of detection accuracy.

{Brief Description of Drawings}

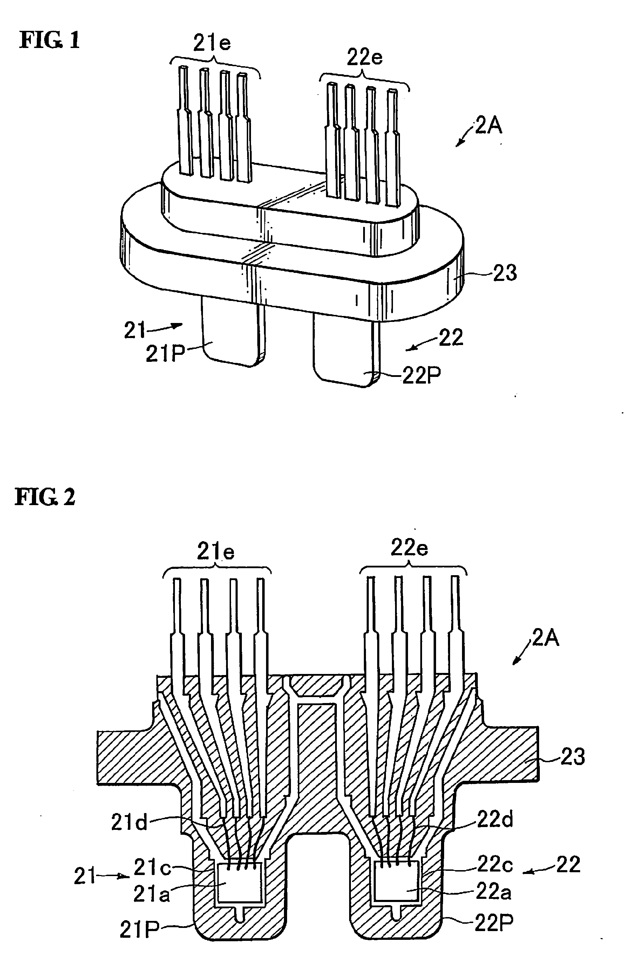

{FIG. 1} A perspective view schematically illustrating an embodiment of a detection unit mold package for a liquid type identification device according to the present invention.

{FIG. 2} A cross-sectional view schematically illustrating the detection unit mold package of FIG. 1.

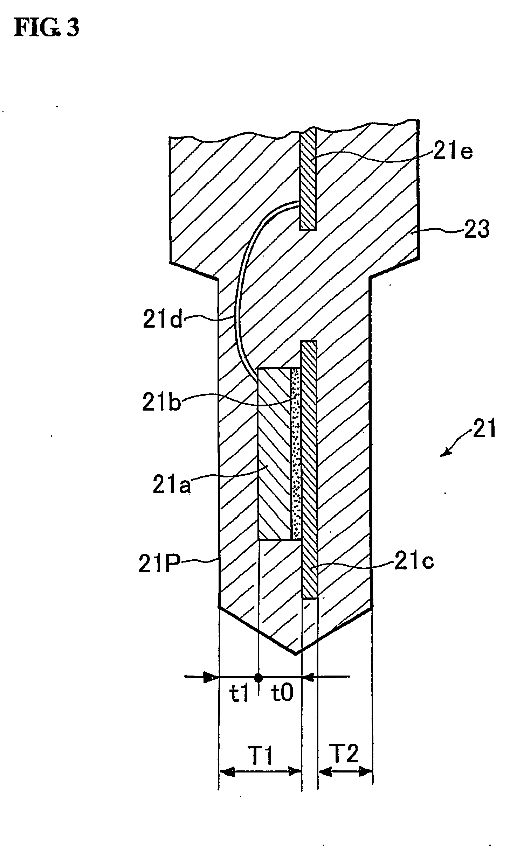

{FIG. 3} A partial cross-sectional view schematically illustrating a first plate-shaped protrusion including a liquid type detection unit of the detection unit mold package of FIG. 1.

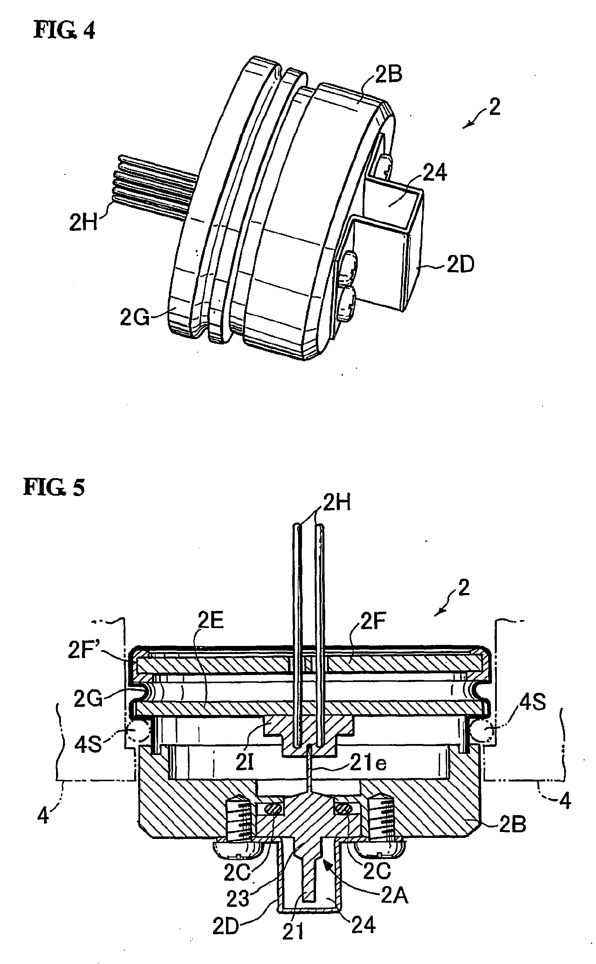

{FIG. 4} A perspective view schematically illustrating a liquid type identification sensor module using the detection unit mold package of FIG. 1.

{FIG. 5} A cross-sectional view schematically illustrating the liquid type identification sensor module of FIG. 4.

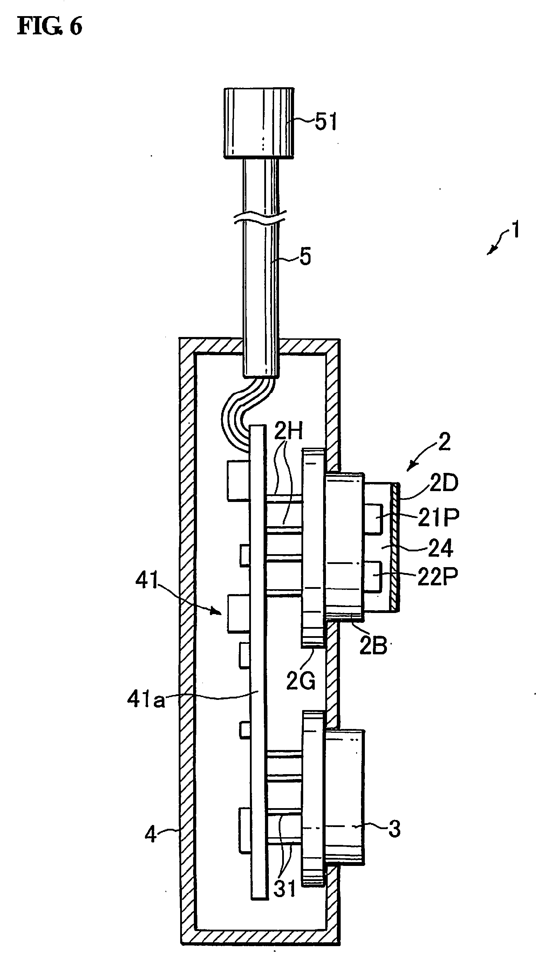

{FIG. 6} A cross-sectional view schematically illustrating a liquid type identification device using the liquid type identification sensor module of FIG. 4.

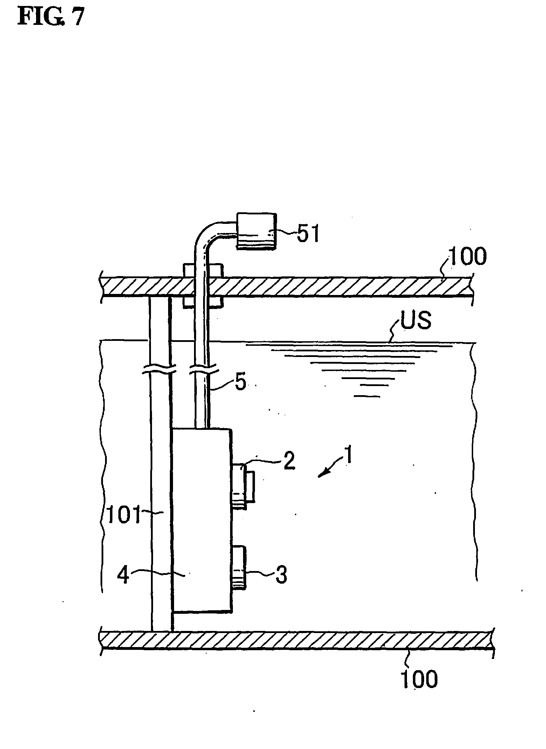

{FIG. 7} A cross-sectional view schematically illustrating a use state of the liquid type identification device of FIG. 6.

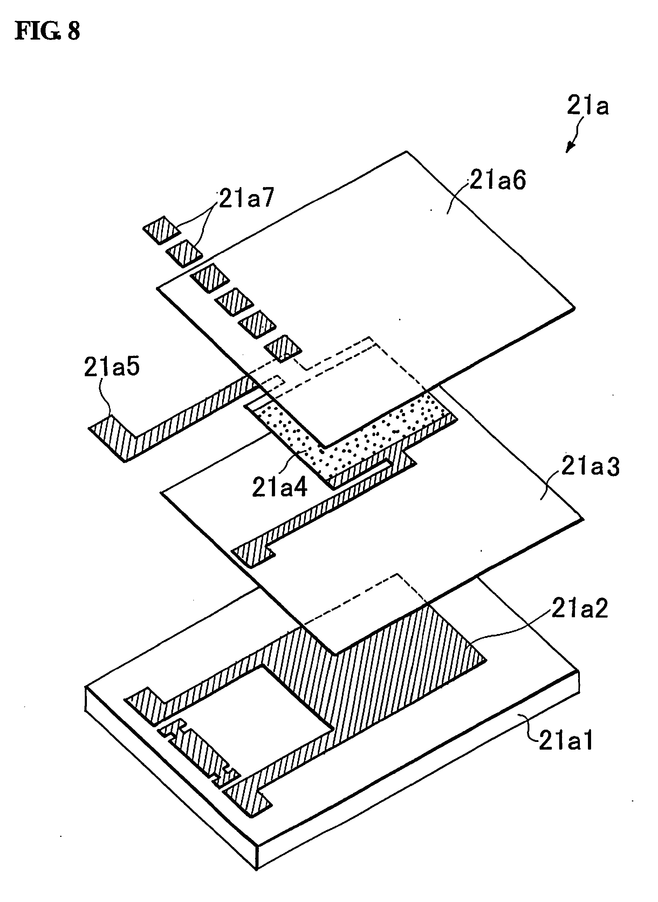

{FIG. 8} An exploded perspective view of the liquid type detection unit.

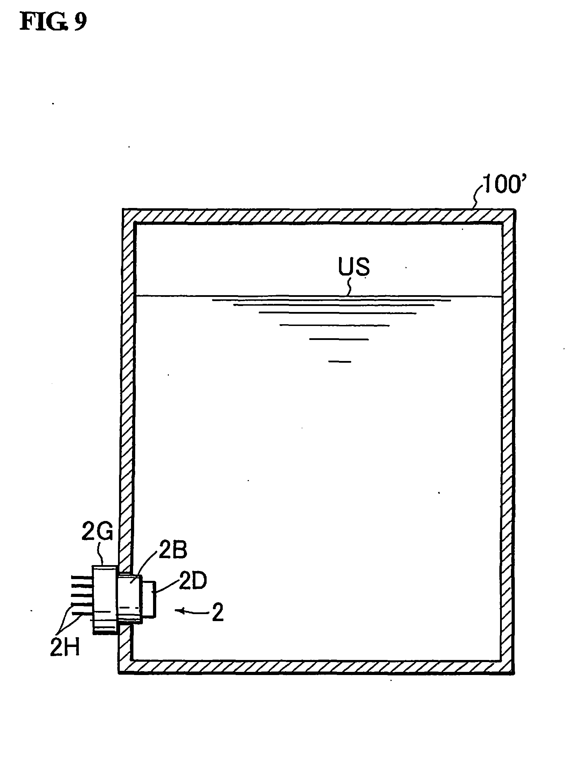

{FIG. 9} A cross-sectional view schematically illustrating another configuration of attachment of an identification sensor module to an urea aqueous solution tank.

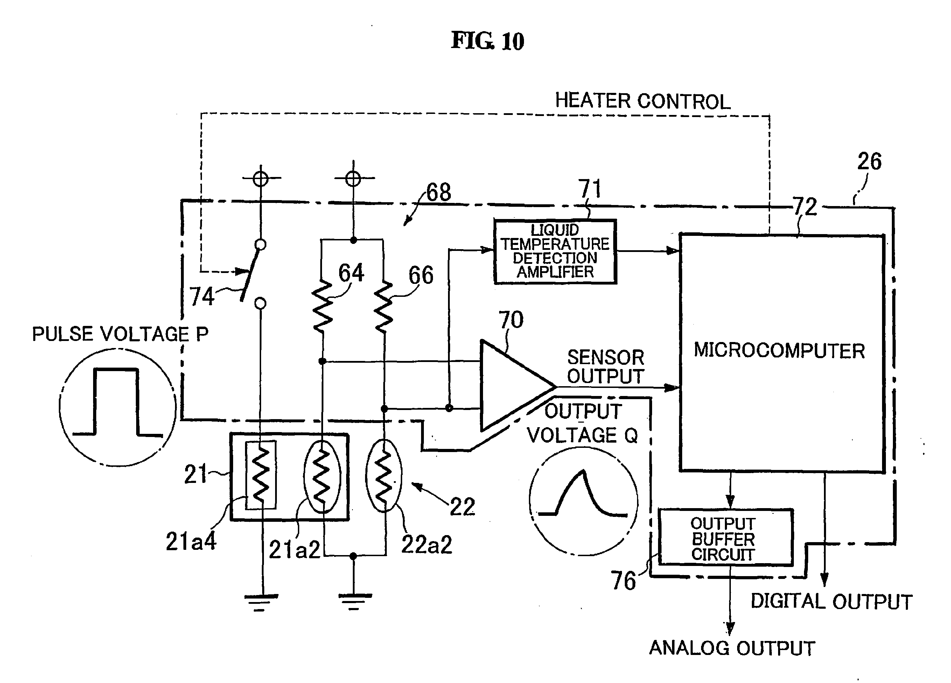

{FIG. 10} A view illustrating a configuration of a circuit for liquid type identification.

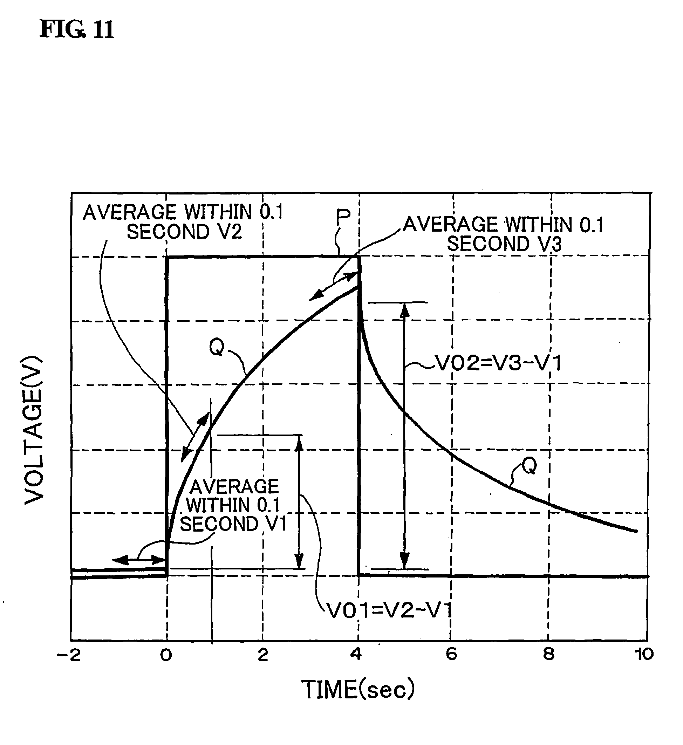

{FIG. 11} A view illustrating a relationship between a single pulse voltage P applied to a heating element and a sensor output Q.

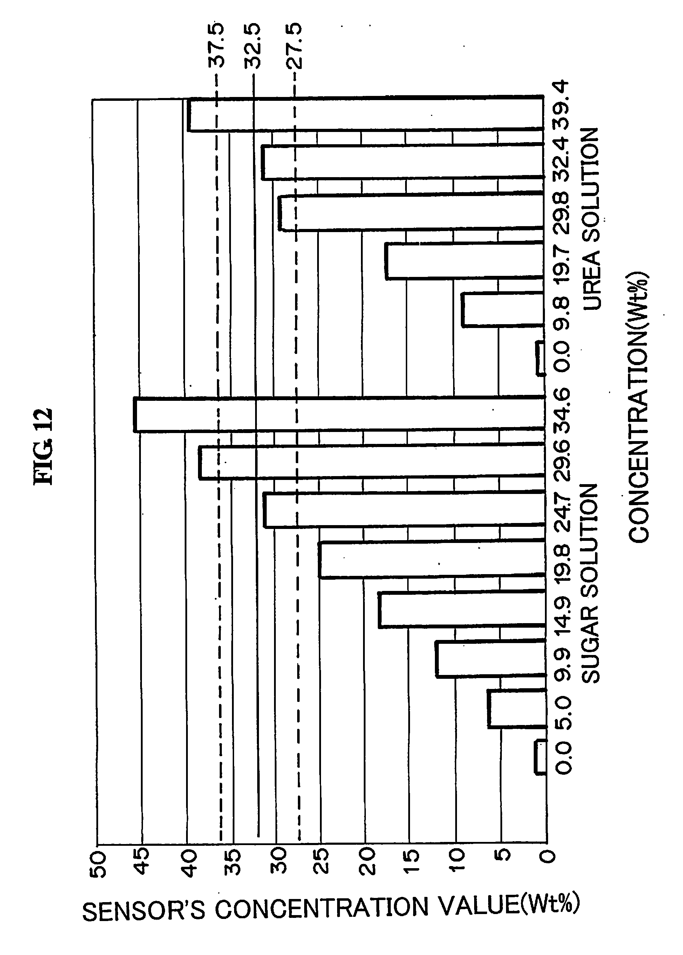

{FIG. 12} A view indicating that a liquid type-corresponding first voltage value of a sugar aqueous solution having a sugar concentration of a certain range is present in the region of a liquid type-corresponding first voltage value $V01$ obtained from a urea aqueous solution having a urea concentration of a given range.

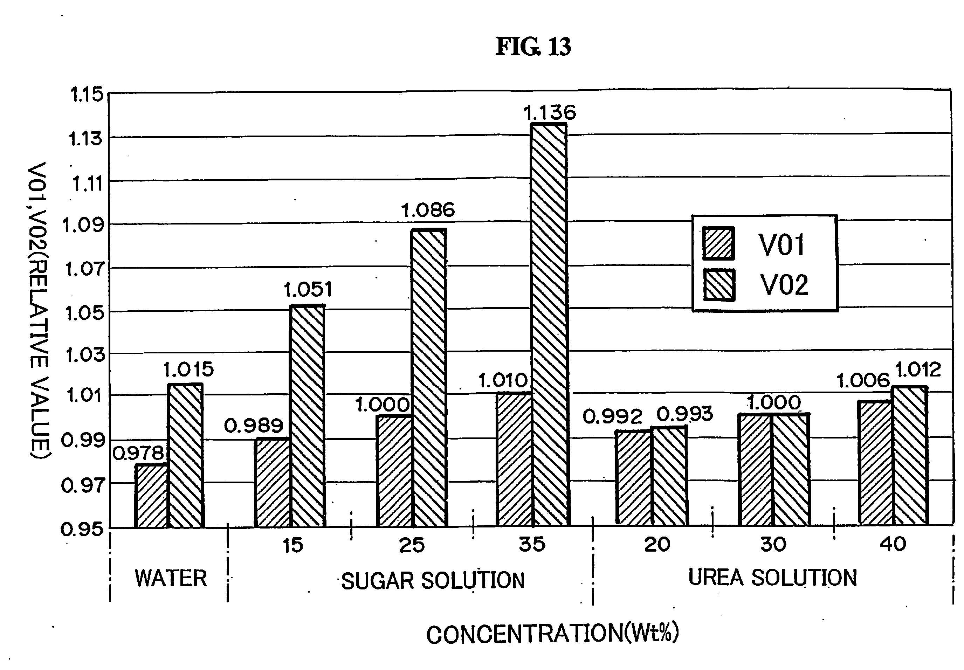

{FIG. 13} A view illustrating liquid type-corresponding first voltage values $V01$ and liquid type-corresponding second voltage values $V02$ of a urea aqueous solution, a sugar aqueous solution and water, which are expressed in relative values given when the voltage value of a urea aqueous solution having a urea concentration of 30% is 1,000.

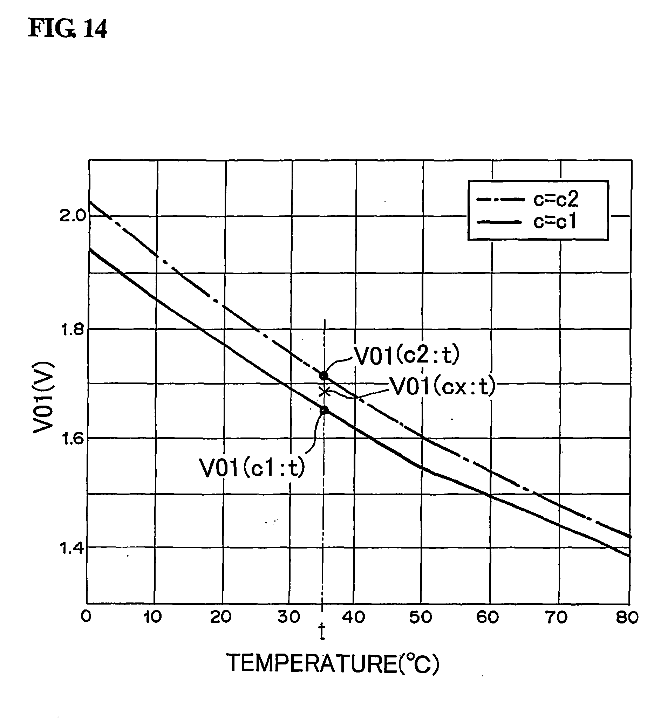

{FIG. 14} A view illustrating examples of first calibration curves.

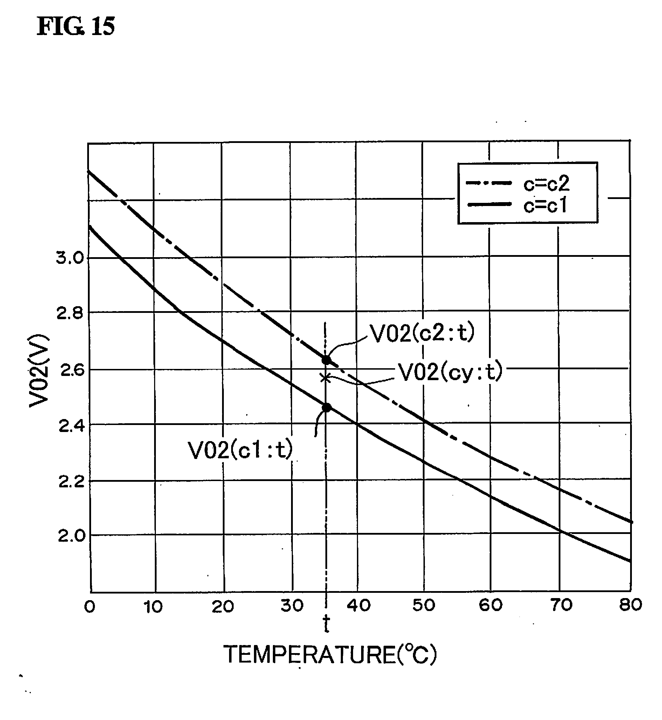

{FIG. 15} A view illustrating examples of second calibration curves.

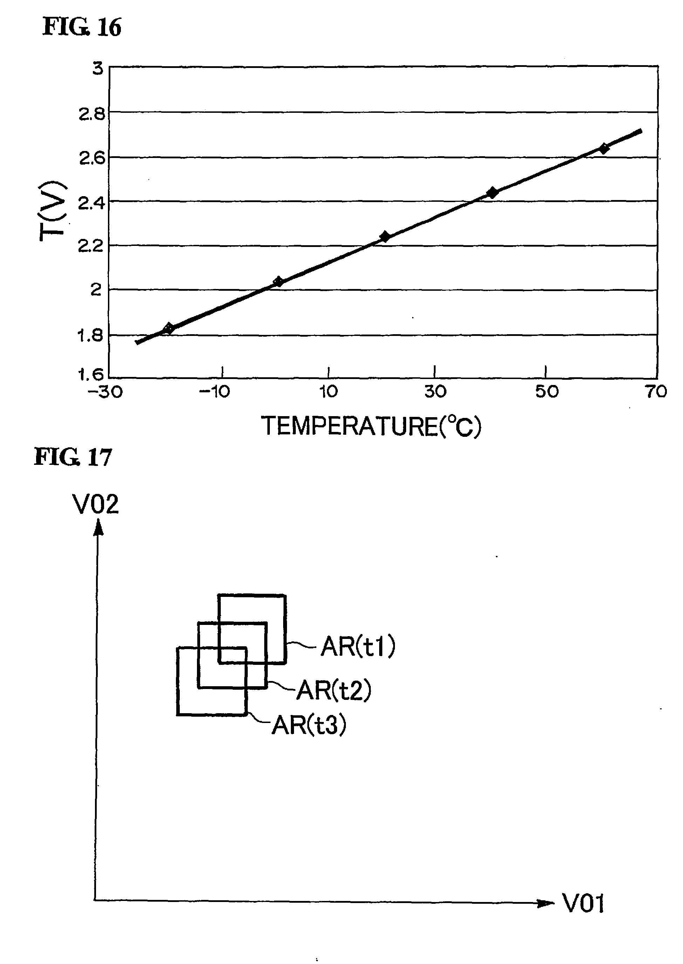

{FIG. 16} A view illustrating examples of liquid temperature-corresponding output values T.

{FIG. 17} A graph schematically indicating that the criterion for identifying a given liquid by a combination of a liquid type-corresponding first voltage value $V01$ and a liquid type-corresponding second voltage value $V02$ varies according to the temperature.

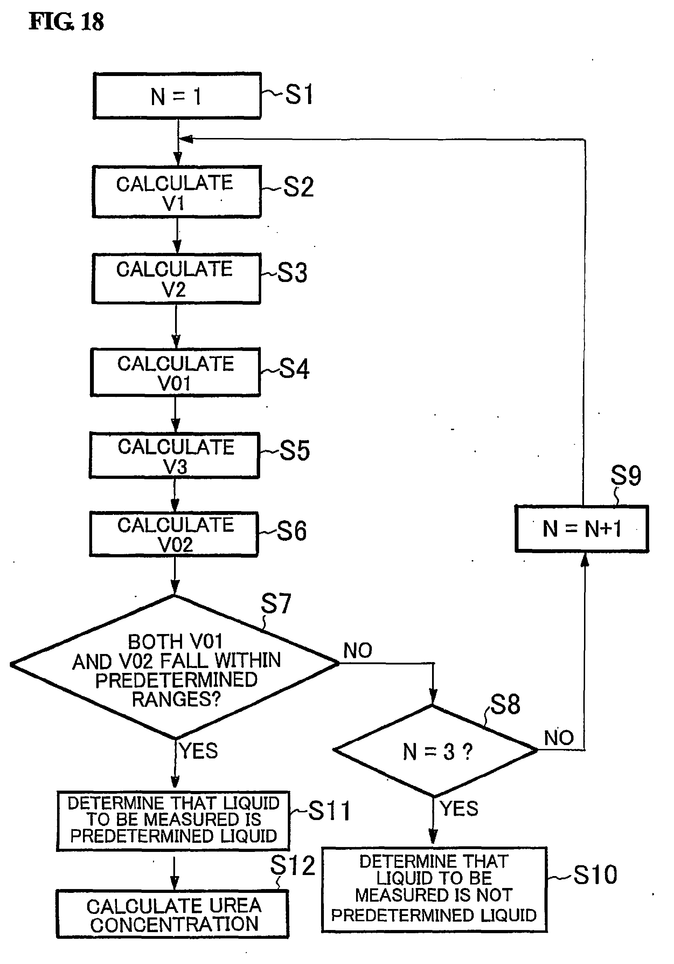

{FIG. 18} A flowchart representing a liquid type identification process.

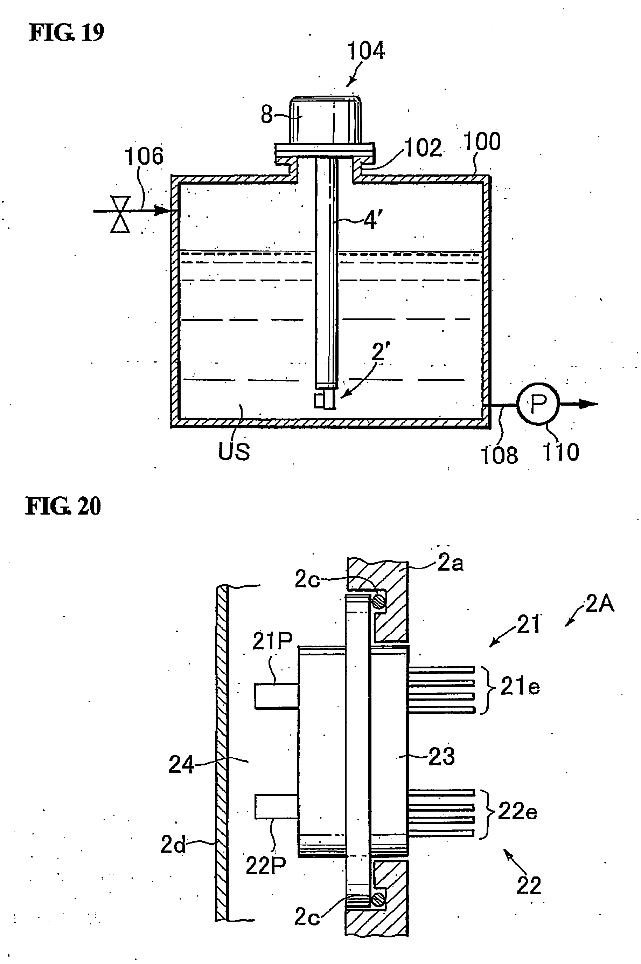

{FIG. 19} A view illustrating an attachment state of a liquid type identification device using the detection unit mold package of the present invention to the tank.
{FIG. 20} A cross-sectional view illustrating the detection unit mold package part in the device of FIG. 19 in an enlarged manner.

{Description of Embodiments}

Embodiments of the present invention will be described below with reference to the accompanying drawings. Although liquid is used as fluid and the type or kind of the liquid is identified as fluid discrimination in the following embodiment, the present invention is not limited to this, but gas or other substances having fluidity may be used as fluid. Further, in the present invention, identification of the type of gas, detection of presence/absence of fluid, or the like can be made as fluid discrimination.

FIG. 1 is a perspective view schematically illustrating an embodiment of a detection unit mold package for a liquid type identification device according to the present invention, FIG. 2 is a schematic cross-sectional view thereof, and FIG. 3 is a partial cross-sectional view schematically illustrating a first plate-shaped protrusion including a liquid type detection unit thereof. FIG. 4 is a perspective view schematically illustrating a liquid type identification sensor module using the detection unit mold package according to the present embodiment, and FIG. 5 is a schematic cross-sectional view thereof. FIG. 6 is a cross-sectional view schematically illustrating a liquid type identification device using the liquid type identification sensor module, and FIG. 7 is a cross-sectional view illustrating a use state thereof.

As illustrated in FIG. 7, a liquid type identification device 1 is attached onto a wall member 101 for constituting a dosing pipe unit disposed inside a tank 100 of a urea aqueous solution for NOx decomposition, the tank constituting an exhaust gas purification system loaded on, for example, an automobile. This attaching or mounting can be carried out by screwing or banding. As illustrated in FIG. 6 and FIG. 7, the liquid type identification device 1 includes a liquid type identification sensor module (hereinafter, some times referred to merely as "identification sensor module") 2, a liquid level sensor module 3, a waterproof case 4 and a waterproof wiring 5.

As illustrated in FIGS. 1 to 3, a detection unit mold package 2A for liquid type identification device constituting the identification sensor module 2 includes a liquid type identification sensor 21 and a liquid temperature sensor 22.

In the liquid type identification sensor 21, a liquid type detection unit 21a to be described later which is a thin-film chip including a heating element and a temperature sensing element is jointed to a first metal die pad 21c through a jointing material 21b. Electrodes of the heating element and temperature sensing element of the liquid type detection unit 21a are electrically connected respectively to an external electrode terminal (lead) 21e by a bonding wire 21d. The liquid temperature sensor 22 has the same configuration. That is, a liquid temperature detection unit 22a which is a thin-film chip including a heating element and a temperature sensing element is jointed to a second metal die pad 22c through a jointing material. Further, electrodes of the heating element and temperature sensing element of the liquid temperature detection unit 22a are electrically connected respectively to an external electrode terminal (lead) 22e by a bonding wire 22d.

FIG. 8 is an exploded perspective view of the liquid type detection unit 21a. The liquid type detection unit 21a consists of a chip substrate 21a1 made of $Al_2O_3$, a temperature sensing element 21a2 made of Pt, an interlayer dielectric film 21a3 made of $SiO_2$, a heating element 21a4 made of $TaSiO_2$, a heating element electrode 21a5 made of Ni, a protective film 21a6 made of $SiO_2$ and an electrode pad 21a7 made of Ti/Au, which are properly laminated in order. The temperature sensing element 21a2 is formed in a zigzag pattern though the pattern is not illustrated in the figure. The electrode pad 21a7 connected to the temperature sensing element 21a2 and to the heating element electrode 21a5 is connected to the external electrode terminal 21e through the bonding wire 21d, as illustrated in FIGS. 2 and 3. The liquid temperature detection unit 22a may have the same configuration. However, in the liquid temperature detection unit 22a, a current is not applied to the heating element, so that the interlayer dielectric film 21a3, heating element 21a4, and heating element electrode 21a5 may be omitted from the configuration of the liquid type detection unit 21a. The thickness of the liquid type detection unit 21a and liquid temperature detection unit 22a is, e.g., 0.2 mm to 1 mm.

As illustrated in FIGS. 1 to 3, the liquid type identification sensor 21 and liquid temperature sensor 22 are formed integrally by a mold resin 23 as a sealing material or sealing member. The mold resin 23 is composed of, e.g., an epoxy resin containing silica and/or carbon. This resin has a hydrophilicity higher than those of the metal die pads 21c and 22c. In place of the mold resin 23, a sealing material made of ceramic or other material may be used. The leading ends of the external electrode terminals 21e and 22e are protruded from the mold resin 23. The mold resin 23 has first and second plate-shaped protrusions 21P and 22P for the liquid type identification sensor 21 and liquid temperature sensor 22 respectively, on the opposite side (lower side in the drawing) of the external electrode terminals 21e and 22e. The first and second plate-shaped protrusions 21P and 22P are immersed in and is brought into contact with liquid to be measured for heat exchange with the liquid to be measured.

The first plate-shaped protrusion 21P is formed by sealing the liquid type detection unit 21a and first metal die pad 21c with the mold resin 23 in such a manner that the liquid type detection unit 21a and first metal die pad 21c are not exposed to the surface of the resin mold 23. The both main surfaces of the first plate-shaped protrusion 21P extend in parallel to the first metal die pad 21c. Similarly, the second plate-shaped protrusion 22P is formed by sealing the liquid temperature detection unit 22a and second metal die pad 22c with the mold resin 23 in such a manner that the liquid temperature detection unit 22a and second metal die pad 22c are not exposed from the surface of the resin mold 23. The both main surfaces of the second plate-shaped protrusion 22P extend in parallel to the second metal die pad 22c. The first and second plate-shaped protrusions 21P and 22P are arranged apart from each other on the same plane (on the paper of FIG. 2).

The first and second metal die pads 21c, 22c and external electrode terminals 21e and 22e are obtained by cutting of a lead frame. The thickness of the metal die pads 21c and 22c is, e.g., 0.2 mm to 0.3 mm.

In the first and second plate-shaped protrusions 21P and 22P, the thickness of the mold resin 23 covering first main surfaces (surfaces of the metal die pads 21c and 22c to which the liquid type detection unit 21a and liquid temperature detection unit 22a are jointed) of the metal die pads 21c and 22c is T1, and thickness of the mold resin 23 covering second main surfaces of the metal die pads is T2. The total thickness of the liquid type detection unit 21a and jointing material 21b or total thickness of the liquid temperature detection unit 22a and its jointing material is t0, and the thickness of the mold resin 23 on the liquid type detection unit 21a or liquid temperature detection unit 22a is t1, wherein t0+t1=T1 is satisfied. The thickness t1 is, e.g., 0.2 mm to 1.0 mm. The thickness T2 is preferably set as small as possible in order to increase the heat transfer rate between the liquid to be measured and metal die pad; on the other hand, in order to prevent occurrence of damage such as crack caused due to time degradation, the thickness T2 is preferably set as large as possible. By setting the thickness of T2 to, e.g., 0.2 mm to 1.5 mm, it is possible to satisfactorily achieve both the increase in the heat exchange rate between the liquid to be measured and metal die pad and prevention of occurrence of the damage.

Further, in order to prevent occurrence of warpage due to heat expansion/contraction caused by temperature change in the first and second plate-shaped protrusions 21P and 22P, it is preferable that the ratio between the thicknesses T1 and T2 be set in a range of 0.5 to 2.0.

The dimension of the liquid type detection unit 21a and liquid temperature detection unit 22a is, e.g., 2 mm to 4 mm in both height and width, and the dimension of the main surface of the first and second plate-shaped protrusions 21P and 22P is, e.g., 3 mm to 5 mm in both height and width.

According to the detection unit mold package for liquid type identification device of the present embodiment, the metal die pads 21c and 22c to which the liquid type detection unit 21a and liquid temperature detection unit 22a are jointed are not exposed to the surface or outside, so that it is possible to prevent entering of the liquid to be measured into the inside of the mold resin even in the long term use to reduce degradation of detection accuracy. Further, according to the present embodiment, the outer surface of the detection unit mold package for liquid type identification device is formed by the mold resin 23 having a hydrophilicity higher than those of the metal die pads 21c and 22c, so that it is possible to reduce adherence of gas bubbles to the outer surface of the mold package in the case where the liquid to be measured is aqueous liquid such as urea aqueous solution, thereby reducing degradation and variation of detection accuracy. Furthermore, the manufacturing process of the detection unit mold package for liquid type identification device according to the present embodiment is made simpler than the manufacturing process for the detection unit mold package of PTL 2.

Further, according to the present invention, the outer surface of the detection unit mold package for liquid type identification device is formed by a sealing material or sealing member such as a mold resin or a mold ceramic having a hydrophilicity higher than that of a metal die pad or those of the first and second metal die pads 21c and 22c, so that it is possible to reduce adherence of gas bubbles to the outer surface of the mold package in the case where the liquid to be measured is aqueous liquid, thereby reducing degradation of detection accuracy. Furthermore, the manufacturing process of the detection unit mold package for liquid type identification device according to the present embodiment is not made complicated.

Using the above detection unit mold package 2A, an identification sensor module 2 illustrated in FIGS. 4 and 5 can be constructed.

As illustrated in FIG. 5, the detection unit mold package 2A is supported by a substantially circular bottom plate 2B. That is, a concave portion facing downward is formed in the center of the bottom plate 2B, and the detection unit mold package 2A is housed in the concave portion through an O-ring 2C for sealing. The first and second plate-shaped protrusions 21P and 22P are positioned below the concave portion, that is, the plate-shaped protrusions 21P and 22P are protruded downward from the lower surface of the bottom plate 2B. A cover member 2D is fixed by screwing to the lower surface of the bottom plate 2B so as to surround the plate-shaped protrusions 21P and 22P protruded from the bottom plate. As illustrated in FIG. 6, by the cover member 2D, a liquid-to-be-measured introduction passage 24 having opened both ends is formed so as to pass through the area in the vicinity of the plate-shaped protrusions 21P and 22P and extend along the lower surface (FIG. 6 illustrates this situation in lateral view) of the bottom plate 2B.

In FIG. 5, a circuit board (liquid type detection circuit board) 2E having substantially a circular plate-like shape is disposed above the bottom plate 2B. A not-illustrated custom IC (ASIC) and other required elements or parts are mounted on the circuit board 2E. As described later, the custom IC is constituted of a part of the liquid type detection circuit and an identification operation part. A cover plate 2F having substantially a circular plate-like shape is disposed above the liquid type detection circuit board 2E. A waterproof seal member 2F' is provided around the cover plate, and the upper end portion of a side wall plate 2G having substantially a cylindrical shape is fixed by caulking to the cover plate 2F through the waterproof seal member. The lower end portion of the side wall plate 2G is fitted to the outer peripheral portion of the upper surface of the bottom plate 2B. A concave annular groove is formed inside the side surface of the side wall plate 2G at the portion between the upper and lower ends of the side wall plate 2G. The outer peripheral portion of the liquid type detection circuit board 2E is fitted in the annular groove, whereby the liquid type detection circuit board 2E is retained. The bottom plate 2B, side wall plate 2G, and cover plate 2F are each made of a corrosion-resistance material such as metal such as stainless steel.

The bottom plate 2B constitute a first member of the present invention, and the side wall plate 2G, cover plate 2F, and waterproof seal member 2F' constitute a second member of the present invention. A housing space is formed between the second and first members. The liquid type detection circuit board 2E, as well as, external electrode terminals 21e and 22e of the liquid type identification sensor 21 and liquid temperature sensor 22 of the detection unit mold package 2A are housed in the housing space. Further, as illustrated in FIG. 5, a wiring member 2I is attached to the lower surface of the liquid type detection circuit board 2E in the housing space. The wiring member connects the leading ends of the external electrode terminals 21e and 22e and the circuit on the liquid type detection circuit board 2E. One ends of a plurality of terminal pins 2H are inserted into the wiring member 2I. The one ends of the terminal pins are connected to the circuit of the liquid type detection circuit board 2E through the wiring member 2I. The terminal pins 2H penetrate the liquid type detection circuit board 2E and cover plate 2F and extend outside. A waterproof seal is provided between each terminal pin 2H and the cover plate 2F.

Using the above identification sensor module 2, the liquid type identification device 1 illustrated in FIGS. 6 and 7 can be constructed.

The liquid level sensor module 3 includes a hitherto publicly known pressure sensor, and the sensor module detects a water pressure received from an in-tank liquid and outputs its detection signal (corresponding to liquid level) from terminal pins 31.

As illustrated in FIG. 6, a power circuit part 41 is disposed in the waterproof case 4, and the power circuit part 41 is supported by a not-illustrated supporting means. The power circuit part 41 includes a circuit board 41a and a necessary circuit element mounted thereon, and generates, e.g., a direct current 5V suitable for driving each circuit of the liquid type identification device 1 based on, e.g., a direct current 24V supplied from an external power source. To the circuit of the circuit board 41a, the terminal pins 2H of the identification sensor module 2 and the terminal pins 31 of the liquid level sensor module 3 are connected.

The waterproof wiring 5 extends upward from the waterproof case 4 and penetrates a top plate of the tank 100, and its end is located outside the tank. The end of the waterproof wiring 5 is provided with a connector 51 for making connection to an external circuit. The waterproof wiring 5 includes a feeder to the power circuit part 41 and output signal lines respectively from the identification sensor module 2 and the liquid level sensor module 3 through the circuit board 41a.

As illustrated in FIG. 5, when the identification sensor module 2 is attached to the waterproof case 4, a seal ring 4S is interposed between them. Further, although not illustrated, when the liquid level sensor module 3 is attached to the waterproof case 4, a similar seal ring is interposed between them.

The identification sensor module 2 is attached to the waterproof case 4 such that the liquid-to-be-measured introduction passage 24 extends in the vertical direction. In this state, the first plate-shaped protrusion 21P is positioned above the second plate-shaped protrusion 22P.

In the above description, the identification sensor module 2 is attached to the waterproof case 4, and the waterproof case 4 is attached to the wall member 101 positioned inside the urea aqueous solution tank 100. Alternatively, however, other attachment configurations may be possible in the present invention.

FIG. 9 is a cross-sectional view schematically illustrating another configuration of the attachment of the identification sensor module to the urea aqueous solution tank. In this configuration, the identification sensor module 2 is directly attached to the outer plate of the urea aqueous solution tank 100'. The attachment in this case may be made in the same manner as the attachment of the identification sensor module 2 to the waterproof case 4. Although not illustrated, the liquid level sensor module can also directly be attached to the outer plate of the urea aqueous solution tank 100' in the same manner. Using the identification sensor module and liquid level sensor module, a liquid type identification device basically the same as the liquid type identification device illustrated in FIGS. 6 and 7 can be constructed.

FIG. 10 illustrates a configuration of a circuit for the liquid type identification in the present embodiment. A bridge circuit (liquid type detection circuit) 68 is formed from the temperature sensing element 21a2 of the liquid type identification sensor 21, the temperature sensing element 22a2 of the liquid temperature sensor 22, and two resistors 64 and 66. The output of the bridge circuit 68 is input into a differential amplifier 70, and the output of the differential amplifier (also referred to as "liquid type detection circuit output" or "sensor output") is input, through a not-illustrated A/D converter, into a microcomputer 72 that constitutes the identification operation part. Into the microcomputer 72, a liquid temperature-corresponding output value corresponding to a temperature of the liquid to be measured is input from the temperature sensing element 22a2 of the liquid temperature sensor 22 through a liquid temperature detection amplifier 71. From the microcomputer 72, a heater control signal to control switching of a switch 74 located on an electrical conduction route to the heating element 21a4 of the liquid type identification sensor 21 is output.

In the present embodiment, the part surrounded with an alternate long and short dash line in FIG. 10 forms the custom IC.

In FIG. 10, the switch 74 is described as a switch that performs mere switching, for simplification, but in the formation of the custom IC, it is possible that a plurality of voltage application routes capable of applying voltages different from one another are formed and any one of the voltage application routes is selected for the heater control. With this configuration, the range of selection of properties of the heating element 21a4 of the liquid type identification sensor 21 can be greatly widened. That is, a voltage that is optimum for the identification can be applied according to the properties of the heating element 21a4. Further, since application of a plurality of voltages different from one another can be carried out in the heater control, the types of the liquid to be identified can be increased.

In FIG. 10, the resistors 64 and 66 are described as resistors whose resistance value is constant, for simplification, but in the formation of the custom IC, it is possible that resistors 64 and 66 whose resistance value is variable are formed and the resistance values of the resistors 64 and 66 are properly changed in the identification. In the formation of the custom IC, similarly to the above, it is possible that the differential amplifier 70 and the liquid temperature detection amplifier 71 capable of being controlled in their properties are formed and the properties of the amplifiers are properly changed in the identification. With this configuration, it is possible to optimally set the properties of the liquid type detection circuit with ease, and to reduce variation in the identification properties caused due to the variation in the manufacturing process of the liquid type identification sensor 21 and the liquid temperature sensor 22 and the variation in the manufacturing process of the custom IC. Accordingly, the manufacturing yield is improved.

A liquid type identifying operation in the present embodiment will be described below.

Firstly, the tank 100 is filled with a liquid to be measured [object liquid] US and, at the same time, the introduction passage 24 for liquid to be measured, which is formed by the cover member 2D of the identifying sensor module 2, is filled with the liquid to be measured US. The liquid to be measured US supplied in the tank 100 and introduction passage 24 for liquid to be measured does not substantially flow.

The switch 74 is closed for a predetermined time period (e.g., 8 seconds) by means of the heater control signal (switch ON signal) output from the microcomputer 72 to the switch 74. Then, a single pulse voltage P having a predetermined height (e.g., 10V) is applied to the heating element 21a4 to allow the heating element to generate heat. An output voltage (sensor output) Q of the differential amplifier 70 at that time gradually increases while a voltage is applied to the heating element 21a4 and gradually decreases after the voltage application to the heating element 21a4 is ended, as shown in FIG. 11.

As shown in FIG. 11, the microcomputer 72 samples the sensor outputs for a predetermined time period (e.g., 0.1 seconds) before the start of voltage application to the heating element 21a4 a predetermined number of times (e.g., 256 times) and performs calculation for obtaining the average value of the sensor outputs to thereby obtain an average initial voltage value V1. The average initial voltage value V1 corresponds to the initial temperature of the temperature sensing element 21a2.

Further, as shown in FIG. 11, the microcomputer 72 samples the sensor outputs for a predetermined time period (e.g., 0.1 seconds) at the time point after a first time period (e.g., 1/2 or less of the single pulse application time (e.g., 0.5 to 3 seconds; 2 seconds in FIG. 11)), which is comparatively short time period, has elapsed from the start of the voltage application to the heating element (specifically, immediately before the elapse of the first time) a predetermined number of times (e.g., 256 times) and performs calculation for obtaining the average value of the sensor outputs to thereby obtain an average first voltage value V2. The average first voltage value V2 corresponds to a first temperature of the temperature sensing element 21a2, which is obtained at the time point after the first time period has elapsed from the start of the single pulse application. Then, a difference V01 (=V2-V1) between the average initial voltage value V1 and average first voltage value V2 is obtained as a liquid-type-corresponding first voltage value.

Further, as shown in FIG. 11, the microcomputer 72 samples the sensor outputs for a predetermined time period (e.g., 0.1 seconds) at the time point after a second time period (e.g., single pulse application time (8 seconds in FIG. 11)), which is comparatively long time period, has elapsed from the start of the voltage application to the heating element (specifically, immediately before the elapse of the second time) a predetermined number of times (e.g., 256 times) and performs calculation for obtaining the average value of the sensor outputs to thereby obtain an average second voltage value V3. The average second voltage value V3 corresponds to a second temperature of the temperature sensing element 21a2, which is obtained at the time point after the second time period has elapsed from the start of the single pulse application. Then, a difference V02 (=V3-V1) between the average initial voltage value V1 and average second voltage value V3 is obtained as a liquid-type-corresponding second voltage value.

A part of the heat generated in the heating element 21a4 at the time of the single pulse voltage application is transferred to the temperature sensing element 21a2 through the liquid to be measured. This heat transfer consists primarily of two modes which differ from each other depending on the time from the start of the pulse application. That is, at a first stage within a comparatively short time period (e.g., 3 seconds, especially 2 seconds) from the start of the pulse application, the heart transfer is mainly controlled by conduction (therefore, the liquid-type-corresponding first voltage value V01 is mainly influenced by the heat conductivity of a liquid). At a second stage after the first stage, the heat transfer is mainly controlled by natural convection (therefore, the liquid-type-corresponding second voltage value V02 is mainly influenced by the kinetic viscosity of a liquid). It is because that, at the second stage, the natural convection caused by the liquid heated at the first stage occurs so that ratio of the heat transfer by the natural convection increases.

As described above, it is considered that the optimum concentration [percent by weight (this is the same in the following description)] of the urea aqueous solution used in the exhaust gas purification system is 32.5%. Therefore, the allowable range of the urea concentration of the urea aqueous solution to be stored in the urea aqueous solution tank 100 can be set to, e.g., 32.5% ± 5%. The value (± 5%) of the allowable range may appropriately be changed. That is, in the present embodiment, the urea aqueous solution having a urea concentration of 32.5 ± 5% is defined as a predetermined solution.

The liquid-type-corresponding first voltage value V01 and liquid-type-corresponding second voltage value V02 change as the urea concentration of the urea aqueous solution changes. Therefore, a range (predetermined range) of the liquid-type-corresponding first voltage value V01 and a range (predetermined range) of liquid-type-corresponding second voltage value V02, which correspond to the urea aqueous solution having a urea concentration of 32.5 ± 5%, exist.

Even in the case of a liquid other than the urea aqueous solution, an output within a predetermined range of the liquid-type-corresponding first voltage value V01 and output within a predetermined range of the liquid-type-corresponding second voltage value V02 may be obtained in some cases, depending on its concentration. In other words, even when the liquid-type-corresponding first voltage value V01 or liquid-type-corresponding second voltage value V02 falls within its predetermined range, a liquid to be measured is not always the predetermined urea aqueous solution. For example, as shown in FIG. 12, the liquid-type-corresponding first voltage value of sugar solution [i.e. sugar aqueous solution] having a sugar concentration of about 25% ± 3% exists within the range of the liquid-type-corresponding first voltage value V01 obtained using the urea solution [i.e. the urea aqueous solution] having a urea concentration falling within the predetermined range of 32.5% ± 5% (i.e., within a range of 32.5% ± 5% in terms of the sensor's concentration value).

However, the value of liquid-type-corresponding second voltage value V02 obtained using the sugar aqueous solution having the above sugar concentration becomes largely different from the liquid-type-corresponding second voltage value V02 obtained using the urea aqueous solution having a urea concentration falling within the predetermined range. That is, as shown in FIG. 13, although some sugar solutions [i.e. sugar aqueous solutions] having a sugar concentration falling within a range of 15% to 35%, including sugar concentration range of the above 25% ± 3%, overlap with the urea solutions [i.e. the urea aqueous solutions] having a urea concentration falling within the predetermined range in terms of the liquid-type-corresponding first voltage value V01, they largely differ from the urea aqueous solutions having a urea concentration falling within the predetermined range in terms of the liquid-type-corresponding second voltage value V02. Note that, in FIG. 13, both of the liquid-type-corresponding first voltage value V01 and liquid-type-corresponding second voltage value V02 are represented by a relative value when the values V01 and V02 of the urea aqueous solution having a urea concentration of 30% are set to 1.000. That is, by making a determination whether the solution to be identified is a predetermined solution based on whether the solution to be identified falls within a predetermined range in terms of both the liquid-type-corresponding first voltage value V01 and liquid-type-corresponding second voltage value V02, it is possible to certainly determine that the above sugar aqueous solution is not a predetermined solution.

Further, a liquid other than a predetermined solution may overlap with the predetermined solution in terms of the liquid-type-corresponding second voltage value V02 in some cases. However, in this case, a liquid to be measured differs from the predetermined solution in terms of the liquid-type-corresponding first voltage value V01, so that it is possible to certainly determine that the liquid to be measured is not a predetermined solution by the above determination.

As described above, in the present invention, identification of the liquid type is performed based on the fact that solutions differ from each other in terms of a combination of the liquid-type-corresponding first voltage value V01 and liquid-type-corresponding second voltage value V02. That is, the liquid-type-corresponding first voltage value V01 and liquid-type-corresponding second voltage value V02 are influenced by different properties, i.e., heat conductivity and kinetic viscosity, so that the combination of the liquid-type-corresponding first voltage value V01 and liquid-type-corresponding second voltage value V02 varies depending on the solution type, which enables the liquid identification as described above. By narrowing the predetermined range of the urea concentration, it is possible to further increase the identification accuracy.

In the embodiment of the present invention, a first calibration curve indicating a relationship between the temperature and liquid-type-corresponding first voltage value V01 and a second calibration curve indicating a relationship between the temperature and liquid-type-corresponding second voltage value V02 are previously obtained with respect to some urea aqueous solutions (reference urea aqueous solutions) each having a known urea concentration, and these calibration curves are stored in a storage means of the microcomputer 72. FIGS. 14 and 15 show examples of the first and second calibration curves, respectively. In these examples, the calibration curves of reference urea aqueous solutions having urea concentrations c1 (e.g., 27.5%) and c2 (e.g., 37.5%) are shown.

As shown in FIGS. 14 and 15, the liquid-type-corresponding first voltage value V01 and liquid-type-corresponding second voltage value V02 change depending on the temperature, so that when these calibration curves are used to identify a liquid to be measured, a liquid-temperature-corresponding output value T which is input from the temperature sensing element 22a2 of the liquid temperature sensor 22 through the liquid temperature detecting amplifier 71 is also used. FIG. 16 shows an example of the liquid-temperature-corresponding output value T. Such a calibration curve is also stored in the storage means of the microcomputer 72.

When the liquid-type-corresponding first voltage value V01 is measured, a temperature value is first obtained from the liquid-temperature-corresponding output value T of the liquid to be measured with reference to the calibration curve of FIG. 16. The obtained temperature value is set as t. Then, on the first calibration curve of FIG. 14, the liquid-type-corresponding first voltage values V01(c1;t) and V01(c2;t) of the respective calibration curves which correspond to the temperature value t are obtained. Subsequently, cx of the liquid-type-corresponding first voltage value V01(cx;t) obtained with respect to the liquid to be measured is determined by performing proportional calculation using the liquid-type-corresponding first voltage values V01(c1;t) and V01(c2;t) of the respective calibration curves. That is, cx is calculated from the following equation (1) based on V01(cx;t), V01(c1;t), and V01(c2;t):

$$cx = c1 +$$
$$(c2\text{-}c1)[V01(cx;t)\text{–}V01(c1;t)]$$
$$/[V01(c2;t)\text{–}V01(c1;t)] \cdots (1)$$

Similarly, when the liquid-type-corresponding second voltage value V02 is measured, the liquid-type-corresponding second voltage values V02(c1;t) and V02(c2;t) of the respective calibration curves which correspond to the temperature value t, which has been obtained as described above, are obtained on the second calibration curve of FIG. 15. Subsequently, cy of the liquid-type-corresponding second voltage value V02(cy;t) obtained with respect to the liquid to be measured is determined by performing proportional calculation using the liquid-type-corresponding second voltage values V02(c1;t) and V02(c2;t) of the respective calibration curves. That is, cy is calculated from the following equation (2) based on V01(cy;t), V01(c1;t), and V01(c2;t):

$$cy = c1 +$$
$$(c2\text{-}c1)[V02(cy;t)\text{–}V02(c1;t)]$$
$$/[V02(c2;t)\text{–}V02(c1;t)] \cdots (2)$$

When the first and second calibration curves of FIGS. 14 and 15 are created based on the liquid-temperature-corresponding output value T in place of the temperature, the storage of the calibration curve of FIG. 16 and conversion using the same can be omitted.

As described above, a predetermined range that changes depending on the temperature can be set with respect, respectively, to the liquid-type-corresponding first voltage value V01 and liquid-type-corresponding second voltage value V02. By setting c1 to 27.5% and c2 to 37.5% as described above, it can be seen that a region between the two calibration curves in each of FIGS. 14 and 15 corresponds to the predetermined liquid (i.e., urea aqueous solution having a urea concentration of 32.5% ± 5%).

FIG. 17 is a graph schematically showing that the criteria of the determination whether the liquid to be measured is a predetermined liquid, which is performed using the combination of liquid-type-corresponding first voltage value V01 and liquid-type-corresponding second voltage value V02, changes depending on the temperature. As the temperature rises (t1, t2, t3 in this order), a region in which a liquid to be measured is determined to be a predetermined liquid is moved (AR(tl), AR(t2), AR(t3) in this order).

FIG. 18 is a flowchart showing a liquid type identifying process performed by the microcomputer 72.

Firstly, N=1 is stored in the microcomputer 72 (S1) before application of a pulse voltage to the heating element 21a4 which is performed under heater control. Then, the microcomputer 72 samples sensor outputs to obtain the average first voltage value V1 (S2). After that, the microcomputer 72 starts heater control and samples sensor outputs at the time after the first time period has elapsed from the start of the voltage application to the heating element 21a4 to obtain the average first voltage value V2 (S3). Then, microcomputer 72 calculates V2-V1 to obtain the liquid-type-corresponding first voltage value V01 (S4). Subsequently, microcomputer 72 samples sensor outputs at the time after the second time period has elapsed from the start of the voltage application to the heating element 21a4 to obtain the average second voltage value V3 (S5). Then, microcomputer 72 calculates V3-V1 to obtain the liquid-type-corresponding second voltage value V02 (S6).

Then, referring to the temperature value t obtained with respect to the liquid to be measured, the microcomputer 72 determines whether a condition that both the liquid-type-corresponding first voltage value V01 and liquid-type-corresponding second voltage value V02 fall within their respective predetermined ranges at the corresponding temperature is satisfied (S7). When determining in S7 that at least one of the liquid-type-corresponding first voltage value V01 and liquid-type-corresponding second voltage value V02 does not fall within its predetermined range (NO in S7), the microcomputer 72 determines whether the stored value N is 3 (S8). When determining that N is not 3 [i.e., the current measurement routine is not the third routine (specifically, the current routine is the first or second routine)] (No in S8), the microcomputer 72 increases the stored value N by 1 (S9) and returns to S2. On the other hand, when determining in S8 that the stored value N is 3 [i.e., the current measurement routine is the third routine] (YES in S8), the microcomputer 72 determines that the liquid to be measured is not a predetermined one (S10).

On the other hand, when determining in S7 that both the liquid-type-corresponding first voltage value V01 and liquid-type-corresponding second voltage value V02 fall within their respective predetermined ranges (YES in S7), the microcomputer 72 determines that the liquid to be measured is a predetermined one (S11).

In the present embodiment, after S11, the urea concentration of the urea aqueous solution is calculated (S12). The urea concentration can be calculated based on the output of the liquid temperature sensor 22, i.e., temperature t obtained with respect to the liquid to be measured, liquid-type-corresponding first voltage value V01, and first calibration curve of FIG. 14 and by using the above equation (1). Alternatively, the urea concentration can be calculated based on the output of the liquid temperature sensor 22, i.e., temperature t obtained with respect to the liquid to be measured, liquid-type-corresponding second voltage value V02, and second calibration curve of FIG. 15 and by using the above equation (2).

In the manner as described above, identification of the liquid type can be performed correctly and quickly. The routine of the liquid type identification can appropriately be performed when a motorcar engine starts up, or periodically, or at the time of a request from a driver or motorcar (ECU to be described later), or key-off time. Further, it is possible to monitor in a desired mode whether or not a liquid in the urea aqueous solution tank is urea aqueous solution having a predetermined urea concentration. A signal (signal indicating whether a liquid to be measured is a predetermined one, as well as, the urea concentration, in the case where the liquid to be measured is a predetermined one [= urea aqueous solution having a predetermined urea concentration]) indicating the liquid type obtained as described above is output to an output buffer circuit 76 shown in FIG. 10 through a not shown D/A converter. The signal is then output as an analog output from the output buffer circuit 76 to a not shown main computer (ECU), which performs motorcar engine combustion control, through the terminal pins 2H, power circuit board 41a and waterproof wiring 5. An analog output voltage value corresponding to the liquid temperature is also output to the main computer (ECU) through the same route. A signal indicating the liquid type can be taken out as a digital output according to need, and can be input to a device, that performs display, alarm, and other operations, through the same route.

Further, an alarm may be issued when it is detected that the temperature of the urea aqueous solution is decreased near to the freezing temperature (about -13°C) of the urea aqueous solution based on the liquid-temperature-corresponding output value T input from the liquid temperature sensor 22.

The liquid type identification described above uses natural convection and uses a principle that there is a correlation between the kinetic viscosity of a liquid to be measured such as urea aqueous solution and sensor output. In order to enhance the accuracy of the liquid identification, it is preferable to make a forced flow due to an external factor less likely to occur in the liquid to be measured around the first and second plate-shaped protrusions 21P and 22P transferring heat between the liquid to be measured and the liquid type detection unit 21a and liquid temperature detection unit 22a. In this regard, it is preferable to use the cover member 2D, especially, one that forms the vertical introduction passage for liquid to be measured. The cover member 2D functions also as a protection member for preventing foreign matters from contacting the first and second plate-shaped protrusions 21P and 22P.

The signal indicating the liquid level (liquid level signal) obtained by the liquid level sensor module 3 is output to the above-mentioned main computer (ECU), which performs motorcar engine combustion control, through the terminal pins 31, power circuit board 41a and waterproof wiring 5. An alarm for requesting replenishment of the urea aqueous solution may be issued when the liquid level signal is decreased to a value lower than the predetermined allowable lower limit value.

In the above embodiment, the detection unit mold package for liquid type identification device has both the first plate-shaped protrusion 21P corresponding to the liquid type identification sensor 21 and the second plate-shaped protrusion 22P corresponding to the liquid temperature sensor 22. However, the present invention is not limited to this, but may include a detection unit mold package for liquid type identification device having only one plate-shaped protrusion corresponding to one of the sensors.

In the above embodiment, a urea aqueous solution having a given or predetermined urea concentration is used as the given or predetermined fluid. However, in the present invention, the given or predetermined liquid may be an aqueous solution using a substance other than urea as a solute or another liquid.

In the above embodiment, the detection unit mold package 2A is used to constitute the liquid type identification sensor module 2, and the liquid type identification sensor module 2 is used to constitute the liquid type identification device 1. Alternatively, however, it is possible to constitute the liquid type identification device using only the detection unit mold package of the present invention without forming the sensor module. FIG. 19 illustrates an attachment state of such a liquid type identification device to the tank, and FIG. 20 illustrates a cross-section of the detection unit mold package part in an enlarged manner.

As illustrated in FIG. 19, an opening portion 102 is formed at the upper portion of the urea aqueous solution tank 100 and a liquid type identification device 104 is attached to the opening portion. The tank 100 is provided with an inlet pipe 106 through which the urea aqueous solution is injected and an outlet pipe 108 through which the urea aqueous solution is taken out. The outlet pipe 108 is connected to the tank at the height position near the bottom of the tank 100, and is connected to a not-illustrated urea aqueous solution sprayer through a urea aqueous solution supply pump 110. By the urea aqueous solution sprayer disposed just before an exhaust gas purification catalyst device in the exhaust system, spraying of the urea aqueous solution is carried out toward the exhaust gas purification catalyst device.

The liquid type identification device has an identification sensor 2' and a support 4'. To one end (lower end) of the support 4', the identification sensor 2' is set, and at the other end (upper end) of the support 4', a mounting part for mounting the support onto the tank opening portion 102 is installed. On the mounting part, a circuit board constituting the liquid type detection circuit or the like is disposed, and a lid member 8 is mounted to cover the circuit board.

The identification sensor 2' has a base 2a attached to the lower end portion of the support 4', and the detection unit mold package 2A is attached to the side surface of the base 2a through an O-ring 2c. To the base 2a, a cover member 2d having the same function as that of the cover member 2D of the sensor module in the above embodiment is fixed.

A liquid level sensor having the same function as that of the liquid level sensor module in the above embodiment may be attached to the base 2a at the portion below the detection unit mold package 2A.

The liquid type detection circuit and other components of this embodiment have basically the same configurations and perform basically the same operations as those of the liquid type detection circuit and other components of the above embodiment.

{Reference Signs List}

| | |
|---|---|
| 1: | liquid type identification device |
| 2: | liquid type identification sensor module |
| 2A: | detection unit mold package |
| 2B: | bottom plate |
| 2C: | O-ring |
| 2D: | cover member |
| 2E: | liquid type detection circuit board |
| 2F: | cover plate |
| 2F': | waterproof seal member |
| 2G: | side wall plate |
| 2H: | terminal pin |
| 2I: | wiring member |
| 21: | liquid type identification sensor |
| 21P: | first plate-shaped protrusion |
| 21a: | liquid type detection unit |
| 21a1: | chip substrate |
| 21a2: | temperature sensing element |
| 21 a3: | interlayer dielectric film |
| 21a4: | heating element |
| 21a5: | heating element electrode |
| 21a6: | protective film |
| 21a7: | electrode pad |
| 21b: | jointing material |

| 21c: | first metal die pad |
|---|---|
| 21d: | bonding wire |
| 21e: | external electrode terminal |
| 22: | liquid temperature sensor |
| 22P: | second plate-shaped protrusion |
| 22a: | liquid temperature detection unit |
| 22a2: | temperature sensing element |
| 22c: | second metal die pad |
| 22e: | external electrode terminal |
| 23: | mold resin |
| 24: | liquid-to-be-measured introduction passage |
| 3: | liquid level sensor module |
| 31: | terminal pin |
| 4: | waterproof case |
| 4S: | seal ring |
| 41: | power circuit part |
| 41a: | circuit board |
| 5: | waterproof wiring |
| 51: | connector |
| 64, 66: | resistor |
| 68: | bridge circuit |
| 70: | differential amplifier |
| 71: | liquid temperature detection amplifier |
| 72: | microcomputer |
| 74: | switch |
| 76: | output buffer circuit |
| 100, | 100': urea aqueous solution tank |
| 101: | wall member |
| 2': | identification sensor |
| 2a: | base |
| 2c: | O-ring |
| 2d: | cover member |
| 4': | support |
| 8: | lid member |
| 102: | opening portion |
| 104: | liquid type identification device |
| 106: | inlet pipe |
| 108: | outlet pipe |
| 110: | urea aqueous solution supply pump |
| US: | liquid to be measured |

**Claims**

1. A detection unit mold package used for a fluid discrimination device which discriminates the type of a fluid to be measured, including a protrusion immersed in the fluid to be measured,
wherein the protrusion is constructed by sealing a detection unit and a die pad jointed to the detection unit.

2. The detection unit mold package according to claim 1, wherein the discrimination device discriminates whether or not the fluid to be measured is a predetermined one, the protrusion is a plate-shaped protrusion, the detection unit is a thin-film chip including at least a temperature sensing element, and both main surfaces of the plate-shaped protrusion extend in parallel to the die pad.

3. The detection unit mold package according to claim 1, that is used for a liquid type identification device which identifies whether or not the liquid to be measured is a predetermined one and includes a plate-shaped protrusion contacting the liquid to be measured for heat exchange with the liquid to be measured,
wherein the plate-shaped protrusion is constructed by sealing, with a sealing material, the detection unit which is a thin-film chip including at least a temperature sensing element and a metal die pad jointed to the detection unit in such a manner that the detection unit and metal die pad are not exposed to the surface, and both main surfaces of the plate-shaped protrusion extend in parallel to the metal die pad.

4. The detection unit mold package according to claim 3, wherein the detection unit mold package includes an external electrode terminal electrically connected to an electrode of the detection unit and protruded from the sealing material in the direction opposite to the plate-shaped protrusion.

5. The detection unit mold package according to claim 3, wherein ratio between the thickness of the sealing material that covers a first main surface of the metal die pad jointed to the detection unit and thickness of the sealing material that covers a second main surface of the metal die pad on the opposite side to the first main surface is set in a range of 0.5 to 2.0.

6. The detection unit mold package according to claim 1, that is used for a liquid type identification device which identifies whether or not the liquid to be measured is a predetermined one and includes first and second plate-shaped protrusions contacting the liquid to be measured for heat exchange with the liquid to be measured,
   wherein the first plate-shaped protrusion is constructed by sealing, with a sealing material, a liquid type detection unit which is a thin film chip including at least a heating element and a temperature sensing element and a first metal die pad jointed to the liquid type detection unit in such a manner that the liquid type detection unit and first metal die pad are not exposed to the surface, both surfaces of the first plate-shaped protrusion extending in parallel to the first metal die pad,
   the second plate-shaped protrusion is constructed by sealing, with a sealing material, a liquid temperature detection unit which is a thin film chip including at least a temperature sensing element and a second metal die pad jointed to the liquid temperature detection unit in such a manner that the liquid temperature detection unit and second metal die pad are not exposed to the surface, both surfaces of the second plate-shaped protrusion extending in parallel to the second metal die pad, and
   the first and second plate-shaped protrusions are arranged apart from each other on the same plane.

7. The detection unit mold package according to claim 6, wherein the detection unit mold package includes external electrode terminals electrically connected respectively to an electrode of the liquid type detection unit and electrode of the liquid temperature detection unit and protruded from the sealing material in the direction opposite to the plate-shaped protrusions.

8. The detection unit mold package according to claim 6, wherein ratio between the thickness of the sealing material that covers a first main surface of the first or second metal die pad jointed to the liquid type detection unit or liquid temperature detection unit and the thickness of the sealing material that covers a second main surface of the first or second metal die pad on the opposite side to the first main surface is set in a range of 0.5 to 2.0.

9. A fluid discrimination sensor module including the detection unit mold package according to claim 1.

10. A liquid type identification sensor module including: the detection unit mold package for liquid type identification device according to claim 3; a first member that supports the detection unit mold package for liquid type identification device such that the plate-shaped protrusion is protruded from the first member; a second member that is fitted to the first member on the side opposite to the side at which the plate-shaped protrusion is protruded from the first member and forms a housing space between itself and the first member; a liquid type detection circuit board that is housed in the housing space and is electrically connected to the detection unit of the detection unit mold package for liquid type identification device; and a terminal pin that is electrically connected to the liquid type detection circuit board and penetrates the second member to extend outside.

11. A liquid type identification sensor module including: the detection unit mold package for liquid type identification device according to claim 6; a first member that supports the detection unit mold package for liquid type identification device such that the first and second plate-shaped protrusions are protruded from the first member; a second member that is fitted to the first member on the side opposite to the side at which the first and second plate-shaped protrusions are protruded from the first member and forms a housing space between itself and the first member; a liquid type detection circuit board that is housed in the housing space and is electrically connected to the liquid type detection unit and liquid temperature detection unit of the detection unit mold package for liquid type identification device; and a terminal pin that is electrically connected to the liquid type detection circuit board and penetrates the second member to extend outside.

**12.** A fluid discrimination device including the detection unit mold package according to claim 1.

**13.** A fluid discrimination device including the sensor module according to claim 9.

**14.** A fluid discrimination device including the sensor module according to claim 10.

**15.** A fluid discrimination device including the sensor module according to claim 11.

**16.** A fluid discrimination method that discriminates the type of the fluid to be measured by using the fluid discrimination device according to any one of claims 12-15.

**17.** The fluid discrimination method according to claim 16, wherein the fluid to be measured is heated, and the type of the fluid to be measured is discriminated based on a plurality of detection signals from the detection unit at a plurality of different time points measured from the start of heating the fluid.

**FIG. 1**

21e          22e

2A

23

21          22
21P          22P

**FIG. 2**

21e          22e

2A

23

21d          22d

21          21c          22c          22
21a          22a
21P          22P

**FIG. 3**

EP 2 154 517 A1

**FIG. 4**

**FIG. 5**

**FIG. 6**

**FIG. 7**

**FIG. 8**

**FIG. 9**

**FIG. 10**

HEATER CONTROL

68 · 71 · 72 · 26

LIQUID TEMPERATURE DETECTION AMPLIFIER

MICROCOMPUTER

PULSE VOLTAGE P

74

64 · 66

70

SENSOR OUTPUT

OUTPUT VOLTAGE Q

21 · 21a4 · 21a2 · 22a2 · 22

OUTPUT BUFFER CIRCUIT

76

DIGITAL OUTPUT

ANALOG OUTPUT

EP 2 154 517 A1

**FIG. 11**

FIG. 12

EP 2 154 517 A1

FIG. 13

EP 2 154 517 A1

**FIG 14**

**FIG. 15**

## FIG. 16

## FIG. 17

**FIG. 18**

```
        ┌──────────────┐
        │    N = 1     │──S1
        └──────────────┘
               │ ◄────────────────────────────┐
               ▼                               │
        ┌──────────────┐                       │
        │  CALCULATE   │──S2                    │
        │      V1      │                        │
        └──────────────┘                        │
               │                                │
               ▼                                │
        ┌──────────────┐                        │
        │  CALCULATE   │──S3                     │
        │      V2      │                         │
        └──────────────┘                         │
               │                                 │
               ▼                                 │
        ┌──────────────┐                         │
        │  CALCULATE   │──S4                      │
        │     V01      │                          │
        └──────────────┘                          │
               │                                  │
               ▼                            ┌─────────┐  S9
        ┌──────────────┐                    │ N = N+1 │──┘
        │  CALCULATE   │──S5                 └─────────┘
        │      V3      │                          ▲
        └──────────────┘                          │
               │                                  │
               ▼                                  │
        ┌──────────────┐                          │
        │  CALCULATE   │──S6                       │
        │     V02      │                           │
        └──────────────┘                           │
               │                                   │
               ▼         S7                        │
          ╱─────────────╲                          │
         ╱   BOTH V01     ╲     NO                  │
        ╱ AND V02 FALL WITHIN╲──────┐              │
        ╲   PREDETERMINED    ╱      │              │
         ╲    RANGES?       ╱       ▼    S8         │
          ╲───────────────╱     ╱───────╲    NO    │
               │ YES          ╱  N = 3 ?  ╲────────┘
               ▼               ╲─────────╱
    ┌───────────────────────┐       │ YES
    │ DETERMINE THAT LIQUID │       ▼
    │  TO BE MEASURED IS    │──S11  ┌──────────────────┐
    │ PREDETERMINED LIQUID  │       │  DETERMINE THAT  │
    └───────────────────────┘       │   LIQUID TO BE   │──S10
               │            S12      │ MEASURED IS NOT  │
               ▼                     │PREDETERMINED LIQUID│
    ┌───────────────────────┐       └──────────────────┘
    │  CALCULATE UREA       │
    │   CONCENTRATION       │
    └───────────────────────┘
```

**FIG. 19**

**FIG. 20**

<table>
<tr><td colspan="2"><b>INTERNATIONAL SEARCH REPORT</b></td><td>International application No.<br>PCT/JP2008/058563</td></tr>
</table>

**A. CLASSIFICATION OF SUBJECT MATTER**
*G01N25/18*(2006.01)i

According to International Patent Classification (IPC) or to both national classification and IPC

**B. FIELDS SEARCHED**

Minimum documentation searched (classification system followed by classification symbols)
G01N25/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 8-149672 (Hitachi Cable, Ltd.),<br>07 June, 1996 (07.06.96),<br>Full text; all drawings<br>(Family: none) | 1-4,6-7,9-17<br>5,8 |
| Y | WO 2005/116620 A1 (Mitsui Mining & Smelting Co., Ltd.),<br>08 December, 2005 (08.12.05),<br>Full text; all drawings<br>& JP 2005-337969 A    & EP 1752762 A1 | 1-4,6-7,9-17 |
| A | JP 10-232169 A (Hitachi, Ltd.),<br>02 September, 1998 (02.09.98),<br>Par. Nos. [0036] to [0037]; Fig. 4<br>(Family: none) | 9-11 |

☐ Further documents are listed in the continuation of Box C.        ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>30 July, 2008 (30.07.08) | Date of mailing of the international search report<br>12 August, 2008 (12.08.08) |
|---|---|
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005337969 A
- JP 2006029956 A